# FASCICULE DE BREVET EUROPEEN

(11) **EP 2 689 658 B1**
(45) Date de publication et mention de la délivrance du brevet: **24.04.2019**
(21) Numéro de dépôt: 13176289.0
(22) Date de dépôt: 12.07.2013
(51) Int. Cl.: A01G 27/00

(54) **Elément d'amorçage pour installation d'arrosage de plantes, kit d'arrosage et installation d'arrosage de plantes comprenant un tel élément d'amorçage**
Befüllelement für Anlage zur Bewässerung von Pflanzen, Bewässerungskit und Pflanzenbewässerungsanlage, die ein solches Befüllelement umfasst
Priming element for a plant-watering facility, plant-watering kit and facility including such a priming element

(30) Priorité: 27.07.2012 FR 1257302
(43) Date de publication de la demande: 29.01.2014
(73) Titulaire: Exel Industries, 51200 Epernay (FR)
(72) Inventeur: Balestra, Philippe, 92300 Levallois (FR); Canin, Bruno, 01250 Saint-Just (FR)
(74) Mandataire: Ahner, Philippe

(56) Documents cités:
- EP-A1- 1 762 139
- GB-A- 2 022 984
- US-A1- 2011 308 153

## Description

La présente invention concerne un élément d'amorçage pour installation d'arrosage de plantes, un kit d'arrosage comprenant un tel élément d'amorçage, et une installation d'arrosage de plantes comprenant un tel élément d'amorçage.

La culture de plantes en milieu urbain ou à l'intérieur de bâtiments est généralement réalisée dans des récipients de culture, tels que des pots de section circulaire, rectangulaire ou allongée. L'arrosage des plantes ainsi cultivées doit être régulier et réalisé avec une attention particulière. Pour faciliter et espacer cet arrosage, il est connu d'utiliser des récipients intégrant une réserve d'eau.

Lorsqu'un récipient de culture n'intègre pas une telle réserve d'eau, il est connu d'utiliser ponctuellement une installation d'arrosage, telle que celle décrite dans les documents EP 0 954 217 B1, US 2011 /0308153 A1, GB 2 022 984 A ou bien EP 1 762 139 A1.

Une telle installation d'arrosage comporte :
- un réservoir d'eau,
- un élément d'amorçage comprenant d'une part un tube en forme de U renversé comportant une première branche plongeant dans le réservoir d'eau, et une deuxième branche opposée à la première branche, et d'autre part de la matière hydrophile contenue à l'intérieur du tube, et
- un tuyau d'arrosage souple relié fluidiquement à la deuxième branche du tube, le tuyau d'arrosage comprenant au moins une zone d'arrosage pourvue d'orifices de distribution d'eau et destinée à être disposée au pied d'une plante.

Une telle installation d'arrosage permet, lors d'une période d'absence prolongée empêchant tout arrosage, une alimentation en eau progressive et continue de la plante.

Toutefois, l'élément d'amorçage d'une telle installation est complexe et onéreux.

La présente invention vise à remédier à ces inconvénients.

Le problème technique à la base de l'invention consiste donc à fournir un élément d'amorçage qui soit de structure simple et économique, et d'utilisation fiable et pratique.

A cet effet, la présente invention concerne un élément d'amorçage pour une installation d'arrosage de plantes, ladite installation comportant un tuyau souple comprenant une première portion d'extrémité destinée à plonger dans un réservoir d'eau et une deuxième portion d'extrémité opposée à la première portion d'extrémité, et au moins un dispositif de distribution d'eau disposé le long du tuyau souple et relié fluidiquement au tuyau souple, caractérisé en ce que l'élément d'amorçage comporte :
- une portion de montage destinée à être montée sur la deuxième portion d'extrémité du tuyau souple, la portion de montage comprenant une ouverture de passage à travers laquelle est destinée à s'étendre la deuxième portion d'extrémité du tuyau souple, et
- des moyens d'obturation destinés à obturer de manière étanche la deuxième portion d'extrémité du tuyau souple.

Ainsi, la portion de montage est agencée pour être montée sur la deuxième portion d'extrémité du tuyau souple, la deuxième portion d'extrémité du tuyau souple est agencée pour s'étendre à travers l'ouverture de passage, et les moyens d'obturation sont agencés pour obturer de manière étanche la deuxième portion d'extrémité du tuyau souple.

Afin de réaliser l'amorçage d'une installation d'arrosage équipée de l'élément d'amorçage selon l'invention, un utilisateur génère une dépression à l'intérieur du tuyau souple, par exemple en aspirant par l'extrémité libre de la deuxième portion d'extrémité du tuyau souple, jusqu'à ce que de l'eau s'écoule par ladite extrémité libre. A ce moment, l'utilisateur replie la deuxième portion d'extrémité du tuyau souple en direction de l'élément d'amorçage, et obture de manière étanche la deuxième portion d'extrémité à l'aide des moyens d'obturation de l'élément d'amorçage.

Une telle étanchéité au niveau de la deuxième portion d'extrémité du tuyau souple permet de maintenir amorcée l'installation d'arrosage et d'assurer une alimentation en eau des dispositifs de distribution d'eau à partir du réservoir d'eau dans lequel plonge la première extrémité du tuyau souple.

Ainsi, bien que l'élément d'amorçage selon l'invention présente une structure simple et économique, il permet de réaliser un amorçage aisé et fiable d'une installation d'arrosage.

De préférence, la portion de montage comporte une première surface tournée du côté de l'introduction de la deuxième portion d'extrémité du tuyau souple dans l'ouverture de passage, et une deuxième surface opposée à la première surface, les moyens d'obturation comportant un organe d'obturation faisant saillie de la deuxième surface de la portion de montage, l'organe d'obturation étant agencé pour d'obturer de manière étanche ladite deuxième portion d'extrémité.

Selon un mode de réalisation de l'invention, la portion de montage est sensiblement plane.

Avantageusement, la portion de montage présente une forme générale de disque.

Selon une première alternative de l'invention, l'organe d'obturation est conformé pour être introduit à l'intérieur de la deuxième portion d'extrémité du tuyau souple et pour coopérer de manière étanche avec la paroi intérieure de ladite deuxième portion d'extrémité. Ainsi, l'organe d'obturation est agencé pour être introduit à l'intérieur de la deuxième portion d'extrémité du tuyau souple et pour coopérer de manière étanche avec la paroi intérieure de ladite deuxième portion d'extrémité.

Selon une deuxième alternative de l'invention, l'organe d'obturation est tubulaire et délimite un logement de réception conformé pour recevoir de manière étanche la deuxième portion d'extrémité du tuyau souple. Ainsi, le logement de réception est agencé pour recevoir de manière étanche la deuxième portion d'extrémité du tuyau souple.

Selon un mode de réalisation de l'invention, l'élément d'amorçage comprend en outre une jupe de section sensiblement circulaire, la jupe délimitant un volume intérieur dans lequel débouche l'ouverture de passage et étant conformée pour être montée de manière étanche dans le goulot d'une bouteille en matière plastique déformable. Ainsi, la jupe est agencée pour être montée de manière étanche dans le goulot d'une bouteille en matière plastique déformable. Ces dispositions permettent de générer une dépression dans le tuyau souple à l'aide de la bouteille, et donc de faciliter l'amorçage de l'installation d'arrosage.

De préférence, la jupe fait saillie de la deuxième surface de la portion de montage.

Selon un mode de réalisation de l'invention, les moyens d'obturation s'étendent dans le volume intérieur délimité par la jupe.

De préférence, la jupe présente une forme générale tronconique convergeant en direction de l'extrémité libre de la jupe. Ces dispositions permettent d'assurer une adaptation de la jupe à des bouteilles présentant des goulots de différents diamètres.

Selon un mode de réalisation de l'invention, l'élément d'amorçage comprend une collerette d'appui délimitée par la portion de montage et faisant saillie par rapport à la paroi extérieure de la jupe. Une telle collerette permet d'une part de faciliter la préhension de l'élément d'amorçage, et d'autre part de former une surface de butée lorsque la jupe est montée sur des bouteilles présentant des goulots de diamètres importants.

Selon un mode de réalisation de l'invention, l'élément d'amorçage est monobloc.

La présente invention concerne en outre un kit d'arrosage pour installation d'arrosage de plantes, comprenant au moins :
- un tuyau souple comprenant une première portion d'extrémité destinée à plonger dans un réservoir d'eau et une deuxième portion d'extrémité opposée à la première portion d'extrémité, et
- un élément d'amorçage selon l'invention.

Selon un mode de réalisation de l'invention, l'ouverture de passage est sensiblement circulaire et présente un diamètre correspondant sensiblement au diamètre extérieur du tuyau souple.

Selon un mode de réalisation de l'invention, le tuyau souple comprend une pluralité d'orifices de distribution d'eau formant chacun un dispositif de distribution d'eau. Selon une variante de réalisation de l'invention, le tuyau souple comprend une pluralité de zones poreuses formant chacune un dispositif de distribution d'eau.

Selon un autre mode de réalisation de l'invention, le kit d'arrosage comprend en outre au moins un dispositif de raccordement destiné à raccorder fluidiquement un dispositif de distribution d'eau au tuyau souple. Ainsi, l'au moins un dispositif de raccordement est agencé pour raccorder fluidiquement un dispositif de distribution d'eau au tuyau souple.

De façon avantageuse, l'au moins un dispositif de raccordement comporte un organe de raccordement comprenant une première portion de raccordement destinée à être raccordée à un premier tronçon du tuyau souple, une deuxième portion de raccordement destinée à être raccordée à un deuxième tronçon du tuyau souple, et une troisième portion de raccordement destinée à être raccordée à un dispositif de distribution d'eau. Ainsi, la première portion de raccordement est agencée pour être raccordée à un premier tronçon du tuyau souple, la deuxième portion de raccordement est agencée pour être raccordée à un deuxième tronçon du tuyau souple, et la troisième portion de raccordement est agencée pour être raccordée à un dispositif de distribution d'eau.

De façon préférentielle, l'au moins un dispositif de raccordement comprend en outre un capuchon réalisé en matière synthétique déformable, le capuchon comportant un fond duquel fait saillie une paroi cylindrique destinée à être montée de manière étanche sur un dispositif de distribution d'eau, le fond du capuchon comprenant un orifice de montage dans lequel est destiné à être montée de manière étanche la troisième portion de raccordement de l'organe de raccordement. Ainsi, la paroi cylindrique faisant saillie du fond du capuchon est agencée pour à être montée de manière étanche sur un dispositif de distribution d'eau, et la troisième portion de raccordement de l'organe de raccordement est agencée pour être montée de manière étanche dans l'orifice de montage prévu sur le fond du capuchon.

Selon un mode de réalisation de l'invention, le capuchon comprend un tube dans lequel débouche l'orifice de montage, le tube faisant saillie du fond du capuchon et étant tourné du même côté que la paroi cylindrique, le tube étant destiné à recevoir de manière étanche la troisième portion de raccordement de l'organe de raccordement. Ainsi, le tube est agencé pour recevoir de manière étanche la troisième portion de raccordement de l'organe de raccordement.

Préférentiellement, le kit d'arrosage comprend en outre au moins un dispositif de distribution d'eau destiné à être inséré dans la terre à proximité d'au moins une plante à arroser, l'au moins un dispositif de distribution d'eau étant destiné à être relié fluidiquement au tuyau souple et disposé le long du tuyau souple. Ainsi, l'au moins un dispositif de distribution d'eau est agencé pour être relié fluidiquement au tuyau souple et être disposé le long du tuyau souple.

Selon un mode de réalisation de l'invention, l'au moins un dispositif de distribution d'eau comporte une portion poreuse, par exemple en céramique. De préférence, la portion poreuse de l'au moins un dispositif de distribution d'eau présente une forme générale de cône.

La présente invention concerne également une installation d'arrosage de plantes comprenant :
- un réservoir d'eau,
- un tuyau souple comportant une première portion d'extrémité plongeant dans l'eau du réservoir d'eau, et une deuxième portion d'extrémité opposée à la première portion d'extrémité,
- au moins un dispositif de distribution d'eau destiné à être inséré dans la terre à proximité d'au moins une plante à arroser,
- au moins un dispositif de raccordement agencé pour raccorder fluidiquement l'au moins un dispositif de distribution d'eau au tuyau souple, et
- un élément d'amorçage selon l'une des revendications 1 à 7 monté sur la deuxième portion d'extrémité du tuyau souple.

Selon un mode de réalisation de l'invention, le tuyau souple est formé par une pluralité de tronçons de tuyau, les extrémités de deux tronçons de tuyau adjacents en regard l'une de l'autre étant raccordées par un dispositif de raccordement.

Selon un mode de réalisation de l'invention, la première portion d'extrémité du tuyau souple est munie d'un élément de lestage, tel qu'une bague de lestage.

De toute façon l'invention sera bien comprise à l'aide de la description qui suit en référence au dessin schématique annexé représentant, à titre d'exemple non limitatif, une forme d'exécution de cet élément d'amorçage et de cette installation d'arrosage.
Figure 1 est une vue schématique d'une installation d'arrosage de plantes selon l'invention.
Figure 2 est une vue en perspective d'un élément d'amorçage de l'installation d'arrosage de la figure 1.
Figures 3 et 4 sont des vues en perspective de l'élément d'amorçage de la figure 2 et d'une portion d'extrémité d'un tuyau souple de l'installation d'arrosage de la figure 1, montrant respectivement la portion d'extrémité du tuyau souple en positions libre et obturée.
Figure 5 est une vue éclatée d'un dispositif de distribution d'eau et d'un dispositif de raccordement appartenant à l'installation d'arrosage de la figure 1.
Figure 6 est une vue en coupe des dispositifs de distribution d'eau et de raccordement de la figure 5 en position raccordée.

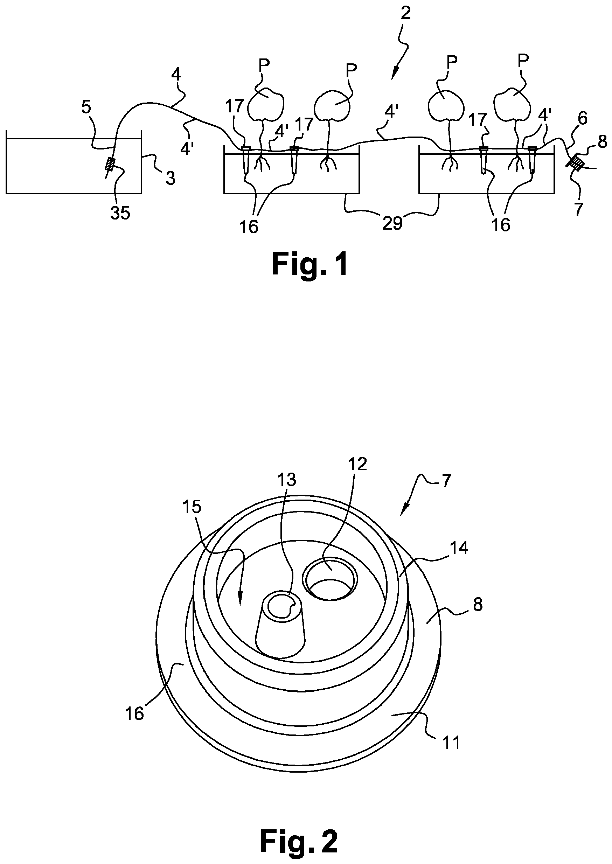

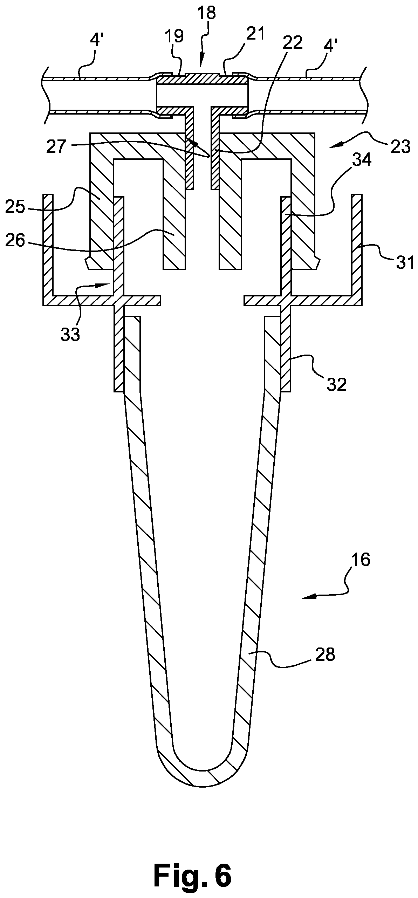

Les figures 1 à 6 représentent une installation d'arrosage 2 de plantes.

L'installation d'arrosage 2 comprend notamment un réservoir d'eau 3 formant réserve d'eau et un tuyau souple 4 comportant une première portion d'extrémité 5 plongeant dans l'eau du réservoir d'eau 3, et une deuxième portion d'extrémité 6 opposée à la première portion d'extrémité 5. Le tuyau souple 4 est avantageusement formé par une pluralité de tronçons de tuyau 4'. Le tuyau souple 4 peut être par exemple réalisé en caoutchouc.

L'installation d'arrosage 2 comprend en outre un élément d'amorçage 7. L'élément d'amorçage 7 peut être réalisé par exemple en matière synthétique.

L'élément d'amorçage 7 comporte une portion de montage 8 plane et en forme générale de disque. La portion de montage 8 comporte une première surface 9, et une deuxième surface 11 opposée à la première surface 9. Comme montré sur la figure 1, la portion de montage 8 est destinée à être montée sur la deuxième portion d'extrémité 6 du tuyau souple 4. Pour cela, la portion de montage 8 comprend une ouverture de passage 12 circulaire débouchant respectivement dans les première et deuxième surfaces 9, 11 et à travers laquelle est destinée à s'étendre la deuxième portion d'extrémité 6 du tuyau souple 4. Avantageusement, l'ouverture de passage 9 présente un diamètre correspondant sensiblement au diamètre extérieur du tuyau souple 3. La deuxième portion d'extrémité 6 du tuyau souple 4 est destinée à être introduite dans l'ouverture de passage 9 de la première surface 9 vers la deuxième surface 11 de la portion de montage 8.

L'élément d'amorçage 7 comporte en outre des moyens d'obturation destinés à obturer de manière étanche la deuxième portion d'extrémité 6 du tuyau souple 4. Selon le mode de réalisation représenté sur les figures, les moyens d'obturation comportent un organe d'obturation 13 tubulaire faisant saillie de la deuxième surface 11 de la portion de montage 8. L'organe d'obturation 13 s'étend de préférence sensiblement perpendiculairement à la deuxième surface 11 de la portion de montage 8.

L'organe d'obturation 13 est conformé pour être introduit à l'intérieur de la deuxième portion d'extrémité 6 du tuyau souple 4 et pour coopérer de manière étanche avec la paroi intérieure de ladite deuxième portion d'extrémité 6. Avantageusement, l'organe d'obturation 13 présente une forme tronconique convergeant en direction de son extrémité libre afin de faciliter son introduction dans la deuxième portion d'extrémité 6 du tuyau souple 4. Selon une variante de réalisation non représentée sur les figures, l'organe d'obturation 13 pourrait délimiter un logement de réception conformé pour recevoir de manière étanche la deuxième portion d'extrémité 6 du tuyau souple 4.

L'élément d'amorçage 7 comporte de plus une jupe 14 de section sensiblement circulaire faisant saillie de la deuxième surface 11 de la portion de montage 8. La jupe 14 présente une forme générale tronconique dont la section diminue de la portion de montage 8 vers l'extrémité libre de la jupe 14. La jupe 14 est conformée pour être montée de manière étanche sur le goulot d'une bouteille en matière plastique déformable. Il doit être noté que la jupe 14 délimite un volume intérieur 15 dans lequel débouche l'ouverture de passage 12 et s'étend l'organe d'obturation 13.

L'élément d'amorçage 7 comporte également une collerette d'appui 16 annulaire délimitée par la portion de montage 8 et faisant saillie par rapport à la paroi extérieure de la jupe 14.

L'installation d'arrosage 2 comprend également une pluralité de dispositifs de distribution d'eau 16 destinés à être insérés chacun dans la terre à proximité d'au moins une plante à arroser P, et une pluralité de dispositifs de raccordement 17 agencés chacun pour raccorder fluidiquement l'un des dispositifs de distribution d'eau 16 au tuyau souple 4, et plus particulièrement aux extrémités de deux tronçons de tuyau adjacents 4' en regard l'une de l'autre.

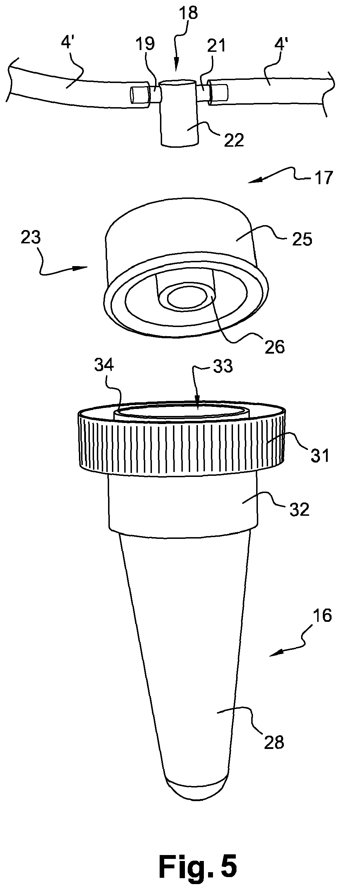

Comme montré sur la figure 5, chaque dispositif de raccordement 17 comporte un organe de raccordement 18 comprenant une première branche de raccordement 19 destinée à être raccordée à un premier tronçon 4' du tuyau souple 4, une deuxième branche de raccordement 21 destinée à être raccordée à un deuxième tronçon 4' du tuyau souple 4, et une troisième branche de raccordement 22 destinée à être raccordée à un dispositif de distribution d'eau 16. Avantageusement, les première et deuxième branches de raccordement 19, 21 de chaque organe de raccordement 18 sont coaxiales. De préférence, la troisième branche de raccordement 22 s'étend sensiblement perpendiculairement aux première et deuxième branches de raccordement 19, 21 correspondantes. Selon un mode de réalisation de l'invention, l'organe de raccordement 18 de chaque dispositif de raccordement 17 présente une forme générale de T.

Chaque dispositif de raccordement 17 comprend en outre un capuchon 23 réalisé en matière synthétique déformable. Le capuchon 23 de chaque dispositif de raccordement 17 comporte un fond 24 duquel font saillie d'une part une paroi cylindrique 25 destinée à être montée de manière étanche et amovible sur un dispositif de distribution d'eau 16, et d'autre part un tube central 26. Le fond 24 de chaque capuchon 23 comprend un orifice de montage 27 débouchant dans le tube central 26 correspondant et dans lequel est destiné à être montée de manière étanche la troisième branche de raccordement 22 de l'organe de raccordement 18 correspondant.

Chaque dispositif de distribution d'eau 16 comporte un élément de distribution 28 poreux en forme générale de cône. L'élément de distribution 28 de chaque dispositif de distribution d'eau 16 peut par exemple être réalisé en céramique. Chaque élément de distribution peut par exemple être inséré dans la terre d'un pot, tel qu'une jardinière 29, ou d'un potager.

Chaque dispositif de distribution d'eau 16 comporte avantageusement un organe d'assemblage 31 comprenant une première portion d'assemblage 32 sur laquelle est montée de manière étanche l'élément de distribution 28, et une deuxième portion d'assemblage 33 comprenant une paroi cylindrique 34 agencée pour coopérer de manière étanche avec la paroi cylindrique 25 du capuchon 23 appartenant au dispositif de raccordement 17 correspondant. L'organe d'assemblage 31 peut par exemple être réalisé en matière synthétique.

L'installation d'arrosage 2 comprend en outre avantageusement un élément de lestage, tel qu'une bague de lestage 35, montée sur la première portion d'extrémité 5 du tuyau souple 4 afin d'éviter tout retrait de la première portion d'extrémité 5 hors du réservoir d'eau 3, et donc tout désamorçage non souhaité de l'installation.

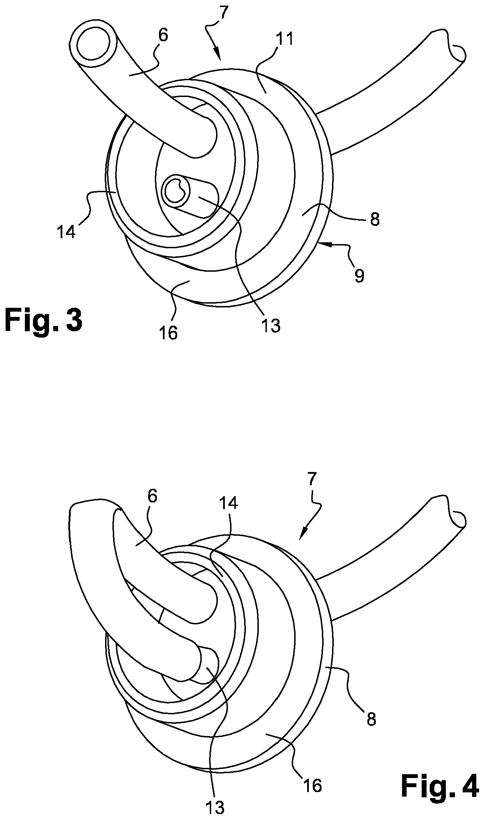

Un premier procédé d'amorçage de l'installation d'arrosage 2 selon l'invention comprend les étapes suivantes consistant à :
- aspirer par l'extrémité libre de la deuxième portion d'extrémité 6 du tuyau souple 4 jusqu'à ce que de l'eau s'écoule par ladite extrémité libre,
- plier la deuxième portion d'extrémité 6 du tuyau souple 4, et
- engager l'extrémité libre de la deuxième portion d'extrémité 6 du tuyau souple 4 autour de l'organe d'obturation 13 de l'élément d'amorçage 7 de manière à assurer une étanchéité au niveau de ladite extrémité libre, comme cela est montré sur la figure 4.

Une telle étanchéité au niveau de ladite extrémité libre permet de maintenir amorcée l'installation d'arrosage 2 et d'assurer une alimentation en eau des dispositifs de distribution d'eau 16 à partir du réservoir d'eau 3 dans lequel plonge la première portion extrémité 5 du tuyau souple 4.

Un deuxième procédé d'amorçage de l'installation d'arrosage 2 selon l'invention comprend les étapes suivantes consistant à :
- insérer la deuxième portion d'extrémité 6 du tuyau souple 4 à travers le goulot d'une bouteille en matière plastique déformable,
- insérer de manière étanche la jupe 14 de l'élément d'amorçage 7 dans le goulot de la bouteille,
- exercer une pression sur la bouteille,
- relâcher la pression exercée sur la bouteille de manière à créer une dépression dans le tuyau souple 4 et un écoulement d'eau au niveau l'extrémité libre de la deuxième portion d'extrémité 6 du tuyau souple 4,
- retirer la jupe 14 de l'élément d'amorçage 7 hors du goulot de la bouteille,
- plier la deuxième portion d'extrémité 6 du tuyau souple 4, et
- engager l'extrémité libre de la deuxième portion d'extrémité 6 du tuyau souple 4 autour de l'organe d'obturation 13 de manière à assurer une étanchéité au niveau de ladite extrémité libre.

Comme il va de soi, l'invention ne se limite pas à la seule forme d'exécution de cet élément d'amorçage et de cette installation d'amorçage, décrite ci-dessus à titre d'exemple, elle en embrasse au contraire toutes les variantes de réalisation.

## Revendications

1. Elément d'amorçage (7) pour une installation d'arrosage de plantes (2), ladite installation comportant un tuyau souple (4) comprenant une première portion d'extrémité (5) destinée à plonger dans un réservoir d'eau (3) et une deuxième portion d'extrémité (6) opposée à la première portion d'extrémité (5), et au moins un dispositif de distribution d'eau (16) disposé le long du tuyau souple (4) et relié fluidiquement au tuyau souple, **caractérisé en ce que** l'élément d'amorçage (7) comporte :
- une portion de montage (8) destinée à être montée sur la deuxième portion d'extrémité (6) du tuyau souple (4), la portion de montage (8) comprenant une ouverture de passage (12) à travers laquelle est destinée à s'étendre la deuxième portion d'extrémité (6) du tuyau souple (4), et
- des moyens d'obturation (13) destinés à obturer de manière étanche la deuxième portion d'extrémité (6) du tuyau souple.

2. Elément d'amorçage selon la revendication 1, dans lequel la portion de montage (8) comporte une première surface (9) tournée du côté de l'introduction de la deuxième portion d'extrémité (6) du tuyau souple dans l'ouverture de passage (12), et une deuxième surface (11) opposée à la première surface, les moyens d'obturation comportant un organe d'obturation (13) faisant saillie de la deuxième surface (11) de la portion de montage (8), l'organe d'obturation (13) étant agencé pour d'obturer de manière étanche ladite deuxième portion d'extrémité (6).

3. Elément d'amorçage (7) selon la revendication 2, dans lequel l'organe d'obturation (13) est conformé pour être introduit à l'intérieur de la deuxième portion d'extrémité (6) du tuyau souple (4) et pour coopérer de manière étanche avec la paroi intérieure de ladite deuxième portion d'extrémité (6).

4. Elément d'amorçage selon l'une des revendications 1 à 3, dans lequel l'élément d'amorçage (7) comprend en outre une jupe (14) de section sensiblement circulaire, la jupe (14) délimitant un volume intérieur (15) dans lequel débouche l'ouverture de passage (12) et étant conformée pour être montée de manière étanche sur le goulot d'une bouteille en matière plastique déformable.

5. Elément d'amorçage (7) selon la revendication 4, dans lequel la jupe (14) présente une forme générale tronconique convergeant en direction de l'extrémité libre de la jupe.

6. Elément d'amorçage (7) selon la revendication 4 ou 5, lequel comprend une collerette d'appui (16) délimitée par la portion de montage (8) et faisant saillie par rapport à la paroi extérieure de la jupe (14).

7. Kit d'arrosage pour installation d'arrosage de plantes, comprenant au moins :
- un tuyau souple (4) comprenant une première portion d'extrémité (5) destinée à plonger dans un réservoir d'eau (3) et une deuxième portion d'extrémité (6) opposée à la première portion d'extrémité (5), et
- un élément d'amorçage (7) selon l'une des revendications 1 à 6.

8. Kit d'arrosage selon la revendication 7, dans lequel l'ouverture de passage (12) est sensiblement circulaire et présente un diamètre correspondant sensiblement au diamètre extérieur du tuyau souple (4).

9. Kit d'arrosage selon la revendication 7 ou 8, lequel comprend en outre au moins un dispositif de raccordement (17) destiné à raccorder fluidiquement un dispositif de distribution d'eau (16) au tuyau souple (4).

10. Kit d'arrosage selon la revendication 9, dans lequel l'au moins un dispositif de raccordement (17) comporte un organe de raccordement (18) comprenant une première portion de raccordement (19) destinée à être raccordée à un premier tronçon (4') du tuyau souple (4), une deuxième portion de raccordement (21) destinée à être raccordée à un deuxième tronçon (4') du tuyau souple (4), et une troisième portion de raccordement (22) destinée à être raccordée à un dispositif de distribution d'eau (16).

11. Kit d'arrosage selon la revendication 10, dans lequel l'au moins un dispositif de raccordement (17) comprend en outre un capuchon (23) réalisé en matière synthétique déformable, le capuchon (23) comportant un fond (24) duquel fait saillie une paroi cylindrique (25) destinée à être montée de manière étanche sur un dispositif de distribution d'eau (16), le fond (24) du capuchon (23) comprenant un orifice de montage (27) dans lequel est destiné à être montée de manière étanche la troisième portion de raccordement (22) de l'organe de raccordement (18).

12. Kit d'arrosage selon la revendication 11, dans lequel le capuchon (23) comprend un tube (26) dans lequel débouche l'orifice de montage (27), le tube (26) faisant saillie du fond (24) du capuchon (23) et étant tourné du même côté que la paroi cylindrique (25), le tube (26) étant destiné à recevoir de manière étanche la troisième portion de raccordement (22) de l'organe de raccordement (18).

13. Kit d'arrosage selon l'une des revendications 7 à 12, lequel comprend en outre au moins un dispositif de distribution d'eau (16) destiné à être inséré dans la terre à proximité d'au moins une plante à arroser, l'au moins un dispositif de distribution d'eau (16) étant destiné à être relié fluidiquement au tuyau souple (4) et disposé le long du tuyau souple (4).

14. Kit d'arrosage selon la revendication 13, dans lequel l'au moins un dispositif de distribution d'eau (16) comporte une portion poreuse (28), par exemple en céramique.

15. Kit d'arrosage selon la revendication 14, dans laquelle la portion poreuse (28) de l'au moins un dispositif de distribution d'eau (16) présente une forme générale de cône.

16. Installation d'arrosage de plantes (2) comprenant :
- un réservoir d'eau (3),
- un tuyau souple (4) comportant une première portion d'extrémité (5) plongeant dans l'eau du réservoir d'eau (3), et une deuxième portion d'extrémité (6) opposée à la première portion d'extrémité (5),
- au moins un dispositif de distribution d'eau (16) destiné à être inséré dans la terre à proximité d'au moins une plante à arroser,
- au moins un dispositif de raccordement (17) agencé pour raccorder fluidiquement l'au moins un dispositif de distribution d'eau (16) au tuyau souple (4), et
- un élément d'amorçage (7) selon l'une des revendications 1 à 6 monté sur la deuxième portion d'extrémité (6) du tuyau souple (4).

17. Installation d'arrosage de plantes (2) selon la revendication 16, dans laquelle le tuyau souple (4) est formé par une pluralité de tronçons de tuyau (4'), les extrémités de deux tronçons de tuyau (4') adjacents en regard l'une de l'autre étant raccordées par un dispositif de raccordement (17).

18. Installation d'arrosage de plantes (2) selon la revendication 16 ou 17, dans laquelle la première portion d'extrémité (5) du tuyau souple (4) est munie d'un élément de lestage (35), tel qu'une bague de lestage.

## Patentansprüche

1. Füllelement (7) für eine Pflanzenbewässerungsanlage (2), wobei die Anlage einen flexiblen Schlauch (4) umfasst, umfassend einen ersten Endbereich (5), der dazu ausgelegt ist, in ein Wasserreservoir (3) einzutauchen, und einen zweiten Endbereich (6) entgegengesetzt zu dem ersten Endbereich (5), sowie wenigstens eine Wasserverteilvorrichtung (16), die entlang des flexiblen Schlauchs (4) angeordnet und fluidisch mit dem flexiblen Schlauch verbunden ist, **dadurch gekennzeichnet, dass** das Füllelement (7) Folgendes umfasst:
- einen Montagebereich (8), der dazu ausgelegt ist, an dem zweiten Endbereich (6) des flexiblen Schlauchs (4) montiert zu sein, wobei der Montagebereich (8) eine Durchgangsöffnung (12) umfasst, durch die hindurch sich der zweite Endbereich (6) des flexiblen Schlauchs (4) erstrecken soll, und
- Verschlussmittel (13), die dazu ausgelegt sind, den zweiten Endbereich (6) des flexiblen Schlauchs dicht zu verschließen.

2. Füllelement nach Anspruch 1, bei dem der Montagebereich (8) eine erste Oberfläche (9) umfasst, die zur Seite der Einführung des zweiten Endbereichs (6) des flexiblen Schlauchs in die Durchgangsöffnung (12) gerichtet ist, und eine zweite Oberfläche (11) entgegengesetzt zu der ersten Oberfläche, wobei die Verschlussmittel ein Verschlussorgan (13) umfassen, das von der zweiten Oberfläche (11) des Montagebereichs (8) vorsteht, wobei das Verschlussorgan (13) dazu ausgelegt ist, den zweiten Endbereich (6) dicht zu verschließen.

3. Füllelement (7) nach Anspruch 2, bei dem das Verschlussorgan (13) dazu ausgelegt ist, in das Innere des zweiten Endbereichs (6) des flexiblen Schlauchs (4) eingeführt zu werden und dicht mit der Innenwand des zweiten Endbereichs (6) zusammenzuwirken.

4. Füllelement nach einem der Ansprüche 1 bis 3, bei dem das Füllelement (7) ferner einen Mantel (14) mit im Wesentlichen kreisförmigen Querschnitt umfasst, wobei der Mantel (14) ein Innenvolumen (15) begrenzt, in das die Durchgangsöffnung (12) mündet, und dazu ausgelegt ist, dicht auf dem Hals einer Flasche aus verformbarem Kunststoffmaterial montiert zu sein.

5. Füllelement (7) nach Anspruch 4, bei dem der Mantel (14) eine allgemeine Kegelstumpfform aufweist, die in Richtung des freien Endes des Mantels konvergiert.

6. Füllelement (7) nach Anspruch 4 oder 5, das einen Anlagekragen (16) umfasst, der durch den Montagebereich (8) begrenzt ist und bezüglich der Außenwand des Mantels (14) vorsteht.

7. Bewässerungskit für eine Pflanzenbewässerungsanlage, umfassend wenigstens Folgendes:
- einen flexiblen Schlauch (4), umfassend einen ersten Endbereich (5), der dazu ausgelegt ist, in ein Wasserreservoir (3) einzutauchen, und einen zweiten Endbereich (6) entgegengesetzt zu dem ersten Endbereich (5), und
- ein Füllelement (7) nach einem der Ansprüche 1 bis 6.

8. Bewässerungskit nach Anspruch 7, bei dem die Durchgangsöffnung (12) im Wesentlichen kreisförmig ist und einen Durchmesser aufweist, der im Wesentlichen dem Außendurchmesser des flexiblen Schlauchs (4) entspricht.

9. Bewässerungskit nach Anspruch 7 oder 8, das ferner wenigstens eine Anschlussvorrichtung (17) umfasst, die dazu ausgelegt ist, eine Wasserverteilvorrichtung (16) fluidisch an den flexiblen Schlauch (4) anzuschließen.

10. Bewässerungskit nach Anspruch 9, bei dem die wenigstens eine Anschlussvorrichtung (17) ein Anschlussorgan (18) umfasst, umfassend einen ersten Anschlussbereich (19), der dazu ausgelegt ist, an einen ersten Abschnitt (4') des flexiblen Schlauchs (4) angeschlossen zu sein, einen zweiten Anschlussbereich (21), der dazu ausgelegt ist, an einen zweiten Abschnitt (4') des flexiblen Schlauchs (4) angeschlossen zu sein, sowie einen dritten Anschlussbereich (22), der dazu ausgelegt ist, an eine Wasserverteilvorrichtung (16) angeschlossen zu sein.

11. Bewässerungskit nach Anspruch 10, bei dem die wenigstens eine Anschlussvorrichtung (17) ferner eine Kappe (23) umfasst, die aus einem verformbaren Kunststoffmaterial hergestellt ist, wobei die Kappe (23) einen Boden (24) umfasst, von dem eine zylindrische Wand (25) vorsteht, die dazu ausgelegt ist, dicht an einer Wasserverteilvorrichtung (16) montiert zu sein, wobei der Boden (24) der Kappe (23) eine Montageöffnung (27) umfasst, in der der dritte Anschlussbereich (22) des Anschlussorgans (18) dicht montiert werden soll.

12. Bewässerungskit nach Anspruch 11, bei dem die Kappe (23) ein Rohr (26) umfasst, in das die Montageöffnung (27) mündet, wobei das Rohr (26) vom Boden (24) der Kappe (23) vorsteht und zur gleichen Seite wie die zylindrische Wand (25) gerichtet ist, wobei das Rohr (26) dazu ausgelegt ist, den dritten Anschlussbereich (22) des Anschlussorgans (18) dicht aufzunehmen.

13. Bewässerungskit nach einem der Ansprüche 7 bis 12, das ferner wenigstens eine Wasserverteilvorrichtung (16) umafsst, die dazu ausgelegt ist, in der Nähe wenigstens einer zu bewässernden Pflanze in die Erde eingesetzt zu sein, wobei die wenigstens eine Wasserverteilvorichtung (16) dazu ausgelegt ist, fluidisch mit dem flexiblen Schlauch (4) verbunden und entlang des flexiblen Schlauchs (4) angeordnet zu sein.

14. Bewässerungskit nach Anspruch 13, bei dem die wenigstens eine Wasserverteilvorrichtung (16) einen porösen Bereich (28) umfasst, beispielsweise aus Keramik.

15. Bewässerungskit nach Anspruch 14, bei dem der poröse Bereich (28) der wenigstens einen Wasserverteilvorrichtung (16) eine allgemeine Kegelform aufweist.

16. Pflanzenbewässerungsanlage (2), umfassend Folgendes:
- ein Wasserreservoir (3),
- einen flexiblen Schlauch (4), umfassend einen ersten Endbereich (5), der in das Wasserreservoir (3) eintaucht, und einen zweiten Endbereich (6) entgegengesetzt zu dem ersten Endbereich (5),
- wenigstens eine Wasserverteilvorrichtung (16), die dazu ausgelegt ist, in der Nähe wenigstens einer zu bewässernden Pflanze in die Erde eingesetzt zu sein,
- wenigstens eine Anschlussvorrichtung (17), die dazu ausgelegt ist, fluidisch die wenigstens eine Wasserverteilvorrichtung (16) an den flexiblen Schlauch (4) anzuschließen, und
- ein Füllelement (7) nach einem der Ansprüche 1 bis 6, das am zweiten Endbereich (6) des flexiblen Schlauchs (4) montiert ist.

17. Pflanzenbewässerungsanlage (2) nach Anspruch 16, bei der der flexible Schlauch (4) durch eine Mehrzahl von Schlauchabschnitten (4') gebildet ist, wobei die einander gegenüber liegenden Enden von zwei benachbarten Schlauchabschnitten (4') mittels einer Anschlussvorrichtung (17) aneinander angeschlossen sind.

18. Pflanzenbewässerungsanlage (2) nach Anspruch 16 oder 17, bei der der erste Endbereich (5) des flexiblen Schlauchs (4) mit einem Ballastelement (35) ausgestattet ist, beispielsweise einem Ballastring.

## Claims

1. Priming element (7) for a plant-watering facility (2), said facility comprising a flexible hose (4) comprising a first end portion (5) intended to be dipped into a water tank (3) and a second end portion (6) opposite the first end portion (5), and at least one water dispensing device (16) arranged along the flexible hose (4) and in fluid connection with the flexible hose, **characterised in that** the priming element (7) comprises:
- a mounting portion (8) intended to be mounted on the second end portion (6) of the flexible hose (4), the mounting portion (8) comprising a passage opening (12) through which the second end portion (6) of the flexible hose (4) is intended to extend, and
- closing means (13) intended to close off the second end portion (6) of the flexible hose in a watertight manner.

2. Priming element according to claim 1, wherein the mounting portion (8) comprises a first surface (9) turned towards the side on which the second end portion (6) of the flexible hose is inserted into the passage opening (12), and a second surface (11) opposite the first surface, the closing means comprising a closing member (13) protruding from the second surface (11) of the mounting portion (8), the closing member (13) being arranged such that it closes off said second end portion (6) in a watertight manner.

3. Priming element (7) according to claim 2, wherein the closing member (13) is shaped such that it can be inserted into the second end portion (6) of the flexible hose (4) and such that it engages with the inside wall of said second end portion (6) in a watertight manner.

4. Priming element according to one of claims 1 to 3, wherein the priming element (7) further comprises a skirt (14), having a substantially circular cross-section, the skirt (14) delimiting an inner space (15) into which the passage opening (12) opens out, and being shaped such that it can be mounted, in a watertight manner, on the neck of a bottle made of deformable plastic.

5. Priming element (7) according to claim 4, wherein the skirt (14) has an overall frustoconical shape converging towards the free end of the skirt.

6. Priming element (7) according to either claim 4 or claim 5, comprising a bearing collar (16) delimited by the mounting portion (8) and protruding relative to the external wall of the skirt (14).

7. Watering kit for a plant-watering facility, comprising at least:
- a flexible hose (4) comprising a first end portion (5) intended to be dipped into a water tank (3) and a second end portion (6) opposite the first end portion (5), and
- a priming element (7) according to one of claims 1 to 6.

8. Watering kit according to claim 7, wherein the passage opening (12) is substantially circular and has a diameter that substantially corresponds to the outer diameter of the flexible hose (4).

9. Watering kit according to either claim 7 or claim 8, further comprising at least one connecting device (17) intended to place a water dispensing device (16) in fluid connection with the flexible hose (4).

10. Watering kit according to claim 9, wherein the at least one connecting device (17) comprises a connecting member (18) comprising a first connecting portion (19) intended to be connected to a first section (4') of the flexible hose (4), a second connecting portion (21) intended to be connected to a second section (4') of the flexible hose (4), and a third connecting portion (22) intended to be connected to a water dispensing device (16).

11. Watering kit according to claim 10, wherein the at least one connecting device (17) further comprises a cap (23) made of a deformable synthetic material, the cap (23) comprising a bottom (24) from which protrudes a cylindrical wall (25) intended to be mounted on a water dispensing device (16) in a watertight manner, the bottom (24) of the cap (23) comprising a mounting orifice (27) in which the third connecting portion (22) of the connecting member (18) is intended to be mounted in a watertight manner.

12. Watering kit according to claim 11, wherein the cap (23) comprises a tube (26) into which the mounting orifice (27) opens out, the tube (26) protruding from the bottom (24) of the cap (23) and being turned towards the same side as the cylindrical wall (25), the tube (26) being intended to receive the third connecting portion (22) of the connecting member (18) in a watertight manner.

13. Watering kit according to one of claims 7 to 12, further comprising at least one water dispensing device (16) intended to be inserted into the ground in the vicinity of at least one plant to be watered, the at least one water dispensing device (16) being intended to be in fluid connection with the flexible hose (4) and arranged along the flexible hose (4).

14. Watering kit according to claim 13, wherein the at least one water dispensing device (16) comprises a porous portion (28), for example made of ceramic.

15. Watering kit according to claim 14, wherein the porous portion (28) of the at least one water dispensing device (16) has an overall cone shape.

16. Plant-watering facility (2) comprising:
- a water tank (3),
- a flexible hose (4) comprising a first end portion (5) dipped into the water of the water tank (3) and a second end portion (6) opposite the first end portion (5),
- at least one water dispensing device (16) intended to be inserted into the ground in the vicinity of at least one plant to be watered,
- at least one connecting device (17) arranged so as to place the at least one water dispensing device (16) in fluid connection with the flexible hose (4), and
- a priming element (7) according to one of claims 1 to 6, mounted on the second end portion (6) of the flexible hose (4).

17. Plant-watering facility (2) according to claim 16, wherein the flexible hose (4) is formed by a plurality of hose sections (4'), the ends of two adjacent hose sections (4') facing one another being connected by a connecting device (17).

18. Plant-watering facility (2) according to either claim 16 or claim 17, wherein the first end portion (5) of the flexible hose (4) is provided with a ballasting element (35), such as a ballasting ring.
